# EUROPEAN PATENT SPECIFICATION

(11) **EP 3 508 383 B1**
(45) Date of publication and mention of the grant of the patent: **20.05.2020**
(21) Application number: 18150715.3
(22) Date of filing: 09.01.2018
(51) Int. Cl.: B60R 7/06, B60K 35/00, B60K 37/06, E05D 15/44

(54) **DEPOSITING DEVICE IN A VEHICLE FOR DEPOSITING OBJECTS AND VEHICLE COMPRISING SUCH A DEPOSITING DEVICE**
ABSCHEIDUNGSVORRICHTUNG IN EINEM FAHRZEUG ZUR ABSCHEIDUNG VON OBJEKTEN UND FAHRZEUG MIT SOLCH EINER ABSCHEIDUNGSVORRICHTUNG
DISPOSITIF DE DÉPÔT DANS UN VÉHICULE PERMETTANT DE DÉPOSER DES OBJETS ET VÉHICULE COMPRENANT UN TEL DISPOSITIF DE DÉPÔT

(43) Date of publication of application: 10.07.2019
(73) Proprietor: Motherson Innovations Company Limited, London, Greater London EC3A 6AP (GB)
(72) Inventor: Heinz, Christoph, 79115 Freiburg (DE); Johannböke, Eckhart, 79346 Endingen (DE); Buchet, Yann, 67000 Strasbourg (FR)
(74) Representative: Westphal, Mussgnug & Partner Patentanwälte mbB

(56) References cited:
- WO-A1-2015/050518
- DE-A1- 1 455 750
- DE-A1-102005 057 188
- DE-A1-102011 105 035
- DE-U1-202005 015 333
- FR-A3- 2 921 876
- FR-A3- 2 943 964
- KR-A- 20100 008 895
- US-A1- 2003 116 988
- US-A1- 2017 327 071

## Description

The present invention relates to a depositing device in a vehicle for depositing objects. Beyond that the present invention is directed to a vehicle comprising such a depositing device.

Depositing devices are part of almost all passenger vehicles and serve for depositing objects like vehicle registration documents, ice scrapers, keys, handkerchiefs or gloves. The latter is the reason why such depositing devices are often called glove boxes. Such depositing devices are amongst others disclosed in FR 2 943 964 A3, that corresponds to the preamble of claim 1, DE 14 55 750 A1, DE 10 2005 057 188 A1, US 2017/327071 A1, KR 10 2010 008 895 A, WO 2015/050518 A1 and DE 10 2011 105 035 A1. The depositing device comprises the glove box that is often integrated into or fastened to an instrument panel. The depositing device further comprises a glove box cover that is usually rotatably mounted on the depositing device and can be moved between a first positon position in which the glove box is closed and a second position in which the glove box is opened and accessible to a passenger situated in the vehicle interior. While in the first position the glove box cover is more or less flush with the instrument panel, in the second position the glove box cover protrudes into the vehicle interior. As a result the glove box cover may contact the legs of the front seat passenger, in particular when the front seat passenger is tall. The glove box cover may thus not be completely movable into the second position so the access to the glove box may be limited. Moreover, the glove box cover protruding into the vehicle interior may pose a risk to the front seat passenger in case of an accident or when the driver needs to strongly brake the vehicle. To overcome this situation DE 10 2005 057 188 A1 discloses a depositing device comprising a receiving section into which the glove box cover can be inserted so that the glove box cover does not protrude into the vehicle interior when the glove box is opened. However, a fairly complex mechanism is needed for enabling the required movements of the glove box cover.

Surface elements may comprise electronical units and may be interactive and at least partially touch-sensitive. In the context of the advancing digitalization of the vehicle the number of interactive surface elements is increasing. Such surface elements may be used for controlling the air condition and/or other electronical components of the vehicle like the electric seat adjustment or the sound system. Moreover the interactive surface elements may be used as displays of an entertainment system enabling the passenger to watch a movie or to surf the internet. When not in use the displays may be part of the vehicle interior illumination.

Such surface elements are prone to wear and may lose their functionality when worn out above a certain degree. Moreover, the passenger may inadvertently abut against the surface element when entering or exiting the vehicle interior, thereby damaging the surface element.

It is one task of the present invention to present a depositing device that addresses the situation discussed above. In particular the glove box cover should protrude into the vehicle interior as little as possible independently of its position. Moreover the depositing device should provide protection for the surface elements, in particular to reduce their wear.

The task is solved by the features specified in claims 1 and 12. Advantageous embodiments are the subject of the dependent claims.

According to one embodiment of the present invention a depositing device in a vehicle for depositing objects comprises a glove box in which objects may be deposited, a surface element mounted adjacent to the glove box, a glove box cover movably mounted on the depositing device between a first position in which the glove box is closed and the surface element at least partly covered, a second position in which the glove box is closed and the surface element is uncovered, and a third position in which the glove box is accessible and the surface element is uncovered, and a receiving section in which the glove box cover is at least partly received when in the first position or when moved out of the first position.

The depositing device here presented does not only comprise the glove box and the glove box cover as such but also a surface element that is mounted adjacently to the glove box. The term "the depositing device comprises a surface element" is to be understood in a way that it comprises all constructional variants in which the surface element is arranged such that it can be covered by the glove box cover even if the surface element may be mounted without physical contact with the depositing device.

Due to the fact that in the first position the glove box cover not only closes the glove box but also at least partly covers the surface element it offers protection for the surface element thereby reducing the wear of the surface element. Only when the passenger wants to interact with the surface element the glove box cover is moved into the second position in which the surface element is uncovered and thus completely accessible for the passenger. Moreover, the risk that a passenger abuts against the surface element when entering or exiting the vehicle interior is reduced.

Next to the protection of the surface element the glove box cover of the depositing device as presented only protrudes into the vehicle interior to a negligible extent. When moved out of the first position toward the second or third position the glove box cover is at least partly received by the receiving section. In the third position the glove box cover may be completely received by the receiving section and thus does not protrude into the vehicle interior at all. Consequently the glove box cover does not take up valuable room of the vehicle interior and does not obstruct the movements of the passenger inside the vehicle interior. Further, the risk that the passenger abuts against the glove box cover when the driver needs to strongly brake the vehicle and the risk of respective injury is reduced.

In accordance with the invention the surface element comprises an electronical unit. The electronical unit may be embodied as a touch sensitive display so that the passenger may surf the internet or watch a movie during the travel. Moreover, the surface element may be used for controlling electronical units of the vehicle such as the air condition, sound system or the electronical seat adjustment. Particularly in case the surface element is embodied as a touch sensitive display it may be prone to wear. By means of the glove box cover as presented protection for the surface element can be provided, thereby safeguarding the functionality and the optical appearance of the surface element.

In a further embodiment the glove box cover is rigid. The manufacture of rigid glove box covers is fairly easy and cost efficient. As a result the manufacturing costs of the presented depositing device can be kept low.

In accordance with another embodiment the glove box cover is flexible. Flexible glove box covers have the advantage that they can be guided very closely along the depositing device when moved between the first and second or third position. The degree by which the glove box covers protrude into the vehicle interior when moved between the given positions can be kept very low. In this embodiment the glove box cover may be manufactured using flexible plastics.

In another embodiment the glove box cover comprises a number of slats movably connected to each other. In this embodiment the glove box cover may be realized as a type of a roller blind. Similar glove box covers are disclosed in EP 2 604 473 A1. In this embodiment the glove box cover can be provided with the required flexibility to guide the glove box cover closely along the depositing device. At the same time the glove box cover can be provided with a certain stiffness to provide mechanical protection for the surface elements.

According to another embodiment the glove box cover is rollably mounted on a rotatable shaft. This embodiment requires that the glove box cover is flexible or that the glove box cover comprises a number of slats. When moved out of the first position the glove box cover is rolled up on the rotatable shaft. The available space needed in this embodiment is low. Moreover, the rotatable shaft may be located fairly flexible inside the depositing device so no or only little constructional changes of the glove box are required.

In a further embodiment the glove box is movably mounted on the depositing device between a retracted position in which it may be covered by the glove box cover and an extended position in which the glove box protrudes from the depositing device. DE 10 2011 105 035 A1 discloses a similar glove box that may be moved between a retracted and an extended position by opening the glove box cover. In contrast to that, the glove box according to the present embodiment may also be moved between the retracted and the extended position independently from the movement of the glove box cover. The passenger may manually pull the glove box out of the retracted position. The access to the glove box is improved.

According to another embodiment the depositing device comprises a locking device for locking the glove box cover in the first or second or third position. The locking device makes sure that the glove box cover remains in one of the given positions and does not uncontrollably move out of a chosen position.

In a further embodiment the depositing device comprises a drive mechanism for moving the glove box cover at least between the first and the third portion and an activation unit for activating the drive mechanism. In this embodiment the passenger only needs to interact with the activation unit and can decide when the glove box cover should be moved. The interaction may be conducted by pressing a button or by voice control. The drive mechanism may also be able to unlock the locking device. The comfort for the passenger and the driver is enhanced.

In accordance with another embodiment the drive mechanism comprises at least one engine for moving the glove box cover and/or the glove box. In this embodiment no further assistance by the driver or the passenger is needed to move the glove box cover and/or the glove box. In particular when the driver is the only person sitting in the vehicle and when the driver wants to use one of the objects deposited inside the glove box, e.g., a handkerchief, the driver may remotely, e.g., by pressing a button on the steering wheel or by voice control, open the glove box and move it into the extended position. The time the driver needs for grabbing the object stored in the glove box is significantly reduced so that the driver's attention to the traffic is hardly decreased.

In a further embodiment the drive mechanism comprises an energy storage for storing energy and for providing energy for the drive mechanism. The energy may be stored in form of mechanical energy, e.g., by a spring accumulator that is preloaded by the movement of the glove box cover or the glove box, or in form of electrical energy. In both cases the energy needed for moving the glove box or the glove box cover may be stored inside the depositing device such that no external energy source is needed.

In a further embodiment a knee airbag is mounted on the depositing device. Knee airbags are becoming an important component of the passenger protection system. The possibility to incorporate the knee airbag into the depositing device facilitates the manufacture of the vehicle interior of the give vehicle and saves valuable space of the vehicle interior. As mentioned above the glove box cover only protrudes into the vehicle interior to a negligible extent independent from the position the glove box cover takes. As a result the inflating knee airbag does not or only barely collide with the glove box cover and thus the airbag inflation is not disturbed by the glove box cover. Glove box covers according to the prior art protruding into the vehicle interior may collide with the inflating airbag which may result in an injury of a passenger.

Another implementation of the present invention is directed to a vehicle, in particular to a passenger vehicle, comprising a depositing device according to one of the embodiments previously presented. The technical effects and advantages as discussed with regard to the present depositing device equally apply to the vehicle. Briefly, the surface elements of the depositing device or the vehicle are efficiently protected thereby safeguarding their functionality and optical appearance. Moreover, the risk that the glove box cover abuts to the legs of a passenger is reduced. Beyond that the risk that the passenger gets injured in case of a strong braking by abutting against the open glove box cover is also reduced.

The present invention is described in detail with reference to the drawings attached wherein
- Figs. 1A to 1D: show a first embodiment of an inventive depositing device in different positions,
- Figs. 2A to 2D: show a second embodiment of the inventive depositing device in different positions,
- Figure 3: shows a third embodiment of the inventive depositing device in a first position, and
- Figure 4: shows a vehicle comprising one embodiment of the inventive depositing device.

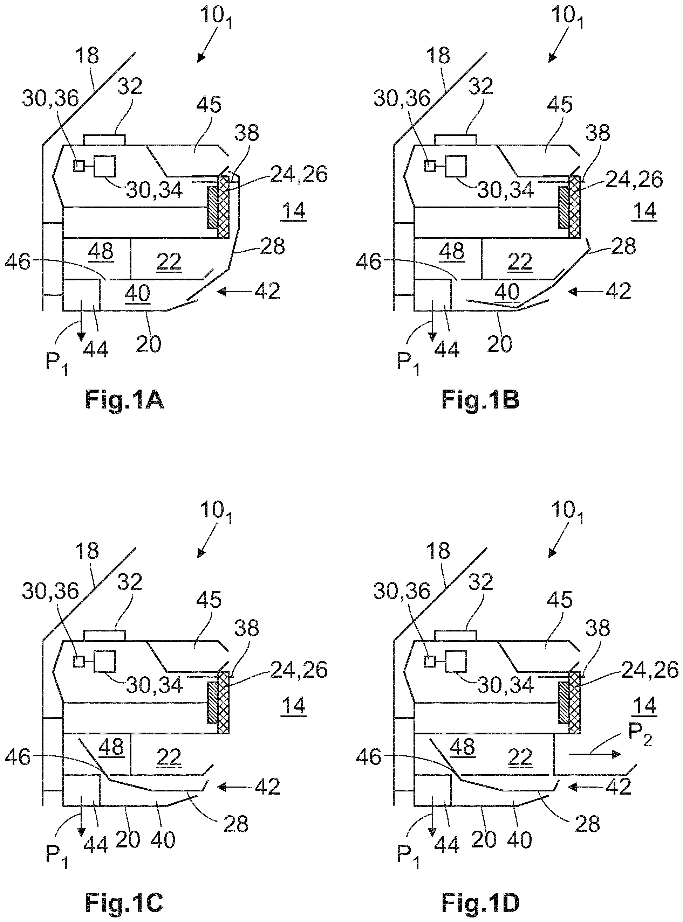

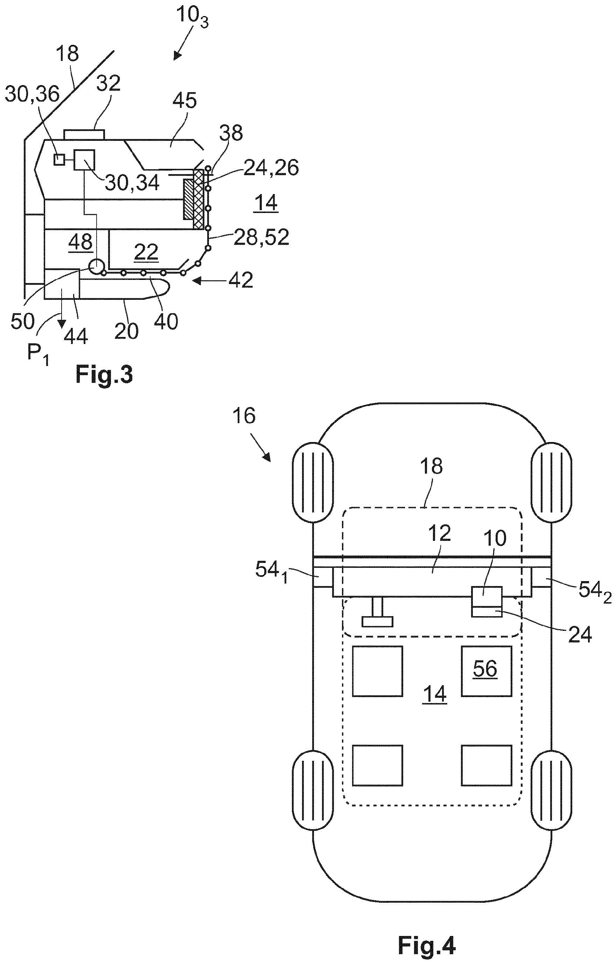

In Figures 1A to 1D a first embodiment of an inventive depositing device 10₁ for depositing objects is shown in different positions by means of principle sketches. The depositing device 10₁ is mounted on or integrated into an instrument panel 12 located in a vehicle interior 14 of a vehicle 16 (see Figure 4). The depositing device 10₁ is located below a windscreen 18 of the vehicle 16.

The depositing device 10₁ comprises a framework 20 to which a glove box 22 is movably fastened such that the glove box 22 can be moved between a retracted position and an extended position as will be explained later in greater detail. Objects like handkerchiefs, tissues or vehicle 16 registration documents may be stored in the glove box 22.

A surface element 24 is mounted adjacent to the glove box 22. The surface element 24 may also be fastened to the framework 20 of the depositing device 10₁ or fastened to support elements (not shown) of the instrument panel 12. The surface element 24 comprises one or more electronical units 26 and may be embodied as a touch sensitive display so that a passenger may use the surface element 24 for watching a movie, surf the internet or control vehicle 16 components like the air condition, the electric seat adjustment or the sound system.

The depositing device 10₁ further comprises a rigid glove box cover 28 that is movably mounted on the depositing device 10₁. The glove box cover 28 is moved by means of a drive mechanism 30 that can be activated by an activation unit 32. In the first embodiment the drive mechanism 30 comprises an engine 34 for moving the glove box cover 28. Moreover the drive mechanism 30 comprises an energy storage 36 for storing energy the drive mechanism 30 needs for moving the glove box cover 28. In this case the engine 34 is an electric motor so that the energy storage 36 stores electrical energy and may be embodied as a battery or an accumulator.

Beyond that the depositing device 10₁ is equipped with a locking device 38 locking the glove box cover 28 in the first position. The locking device 38 may also be able to lock the glove box cover 28 in the second or third position to avoid uncontrolled movement of the glove box cover 28, e.g., in case of vibrations generated by the operation of the vehicle 16. The drive mechanism 30 may also be able to unlock the locking device 38 when activated.

In Figure 1A the glove box cover 28 is in a first position in which the glove box cover 28 closes the glove box 22 and completely or almost completely covers the surface element 24. In Figure 1B the glove box cover 28 is in a second position in which the glove box 22 is still closed by the glove box cover 28 but the surface element 24 is uncovered and thus accessible for the passenger sitting in the vehicle interior 14.

The depositing device 10₁ further comprises a receiving portion 40 for receiving the glove box cover 28. The receiving portion 40 is located below the glove box 22 and comprises a front opening 42. Opposite of the front opening 42 the receiving portion 40 is limited by a knee airbag 44. The direction along which the knee airbag 44 moves when released is indicated by the arrow P₁. Moreover, a manifold 45 of an air conditioning system is integrated into the depositing device 10₁.

In the first position as shown in Figure 1A the glove box cover 28 barely protrudes into the receiving portion 40 through the front opening 42. In the second position the glove box cover 28 protrudes into the receiving portion 40 with approximately its lower half.

In Figure 1C the glove box cover 28 is moved into a third position in which it is almost completely located inside the receiving portion 40. As visible from the Figures 1A to 1D the receiving portion 40 comprises an upper opening 46 that is penetrated by the glove box cover 28 when moved from the second position into the third position. Accordingly the glove box cover 28 protrudes into a hollow space 48 behind the glove box 22.

In the third position the glove box 22 and the surface element 24 are uncovered. In order to enhance the accessibility of the glove box 22 the glove box 22 is moved from the retracted position into the extended position as shown in Figure 1D. The direction along which the glove box 22 is moved is indicated by the arrow P₂. In the extended position the glove box 22 protrudes from the depositing device 10₁ into the vehicle interior 14. A passenger can now easily grab objects stored inside the glove box 22. Like the glove box cover 28 the glove box 22 is also moved by the engine 34 of the drive mechanism 30.

By a respective interaction with the activation unit 32 the passenger can decide in which position the glove box 22 and the glove box cover 28 should be moved. The activation unit 32 comprises a control unit (not shown) that coordinates the movements of the glove box 22 and the glove box cover 28 ensuring that the glove box 22 is only moved into the extended position when the glove box cover 28 is in the third position. As evident from the Figures 1A to 1D the glove box cover 28 always remains close to the framework 20 of the depositing device 10₁ and barely protrudes into the vehicle interior 14 irrespective of the position taken by the glove box cover 28. Moreover, the functionality of the knee airbag 44 is not affected by the inventive depositing device 10₁.

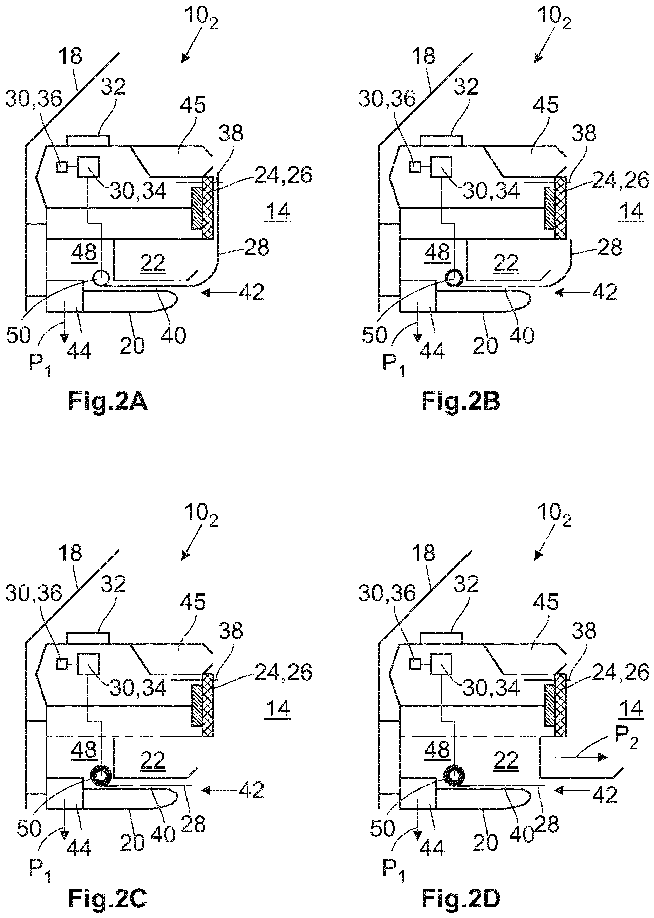

Figures 2A to 2D show a second embodiment of the inventive depositing device 10₂. In this case the glove box cover 28 is flexible. When moved out of the first position the glove box cover 28 is rolled up onto a rotatable shaft 50 which is a very space-saving way of handling the glove box cover 28. Compared to the first embodiment less space is needed for the implementation of the second embodiment of the depositing device 10₂. As a result the glove box 22 may be enlarged.

Like in the first embodiment the drive mechanism 30 comprises the engine 34 and the energy storage 36. The engine 34 rotates the rotatable shaft. However, in the second embodiment the glove box cover 28 may manually be moved from the third position into the first position by the passenger, thereby preloading a spring accumulator (not shown). When activating the drive mechanism 30 the spring accumulator rotates the rotatable shaft 50, thereby moving the glove box cover 28 out of the first position. In this case the spring accumulator forms the energy storage 36 storing mechanical energy.

In Figure 3 a third embodiment of the depositing device 10₃ is shown. For the sake of clarity the depositing device 10₃ according to the third embodiment is only shown in the first position. In this case the glove box cover 28 comprises a number of slats 52 that are movably connected to each other. Like a roller blind the slats 52 are rotatable relative to each other around a turning axis perpendicular to the drawing plane of Figure 3. The remaining design of the depositing device 10₃ according to the third embodiment is equal to the design of the depositing device 10₂ according to the second embodiment.

Figure 4 shows a vehicle 16 comprising the depositing device 10 according to one of the embodiments presented above. As evident from Figure 4 the depositing device 10 is integrated into the instrument panel 12 that is mounted between a first A-pillar 54₁ and a second A-pillar 54₂ of the vehicle 16. The depositing device 10₁ and the surface element 24 are particularly accessible for the passenger sitting on the front passenger's seat 56 located in the vehicle interior 14 and next to the deposition device 10.

### List of reference signs

- 10, 10₁ - 10₃: depositing device
- 12: instrument panel
- 14: vehicle interior
- 16: vehicle
- 18: windscreen
- 20: framework
- 22: glove box
- 24: surface element
- 26: electronical unit
- 28: glove box cover
- 30: drive mechanism
- 32: activation unit
- 34: engine
- 36: energy storage
- 38: locking device
- 40: receiving section
- 42: front opening
- 44: knee airbag
- 45: manifold
- 46: upper opening
- 48: hollow space
- 50: rotatable shaft
- 52: slat
- 54, 54₁, 54₂: A-pillar
- 56: front passenger's seat

- P₁: arrow
- P₂: arrow

## Claims

1. Depositing device in a vehicle (16) for depositing objects, comprising
- a glove box (22) in which objects may be deposited,
- a surface element (24) mounted adjacent to the glove box (22),
- a glove box cover (28) movably mounted on the depositing device (10) between
a first position in which the glove box (22) is closed and the surface element (24) at least partly covered,
a second position in which the glove box (22) is closed and the surface element (24) is uncovered, and
a third position in which the glove box (22) is accessible and the surface element (24) is uncovered, and
- a receiving section (40) in which the glove box cover (28) is at least partly received when in the first position or when moved out of the first position
**characterized in that** the surface element (24) comprises an electronical unit (26).

2. Depositing device according to claim 1,
**characterized in that** the glove box cover (28) is rigid.

3. Depositing device according to claim 1,
**characterized in that** the glove box cover (28) is flexible.

4. Depositing device according to claim 1,
**characterized in that** the glove box cover (28) comprises a number of slats (52) movably connected to each other.

5. Depositing device according to one of the claims 3 or 4,
**characterized in that** the glove box cover (28) is rollably mounted on a rotatable shaft (50).

6. Depositing device according to one of the preceding claims,
**characterized in that** the glove box (22) is movably mounted on the depositing device (10) between a retracted position in which it may be covered by the glove box cover (28) and an extended position in which the glove box (22) protrudes from the depositing device (10) .

7. Depositing device according to one of the preceding claims,
**characterized in that** the depositing device comprises a locking device (38) for locking the glove box cover (28) in the first or second or third position.

8. Depositing device according to one of the preceding claims,
**characterized in that** the depositing device (10) comprises a drive mechanism (30) for moving the glove box cover (28) at least between the first and the third portion and an activation unit (32) for activating the drive mechanism (30).

9. Depositing device according to claim 8,
**characterized in that** the drive mechanism (30) comprises an engine (34) for moving the glove box cover (28) and/or the glove box (22).

10. Depositing device according to one of the claims 8 or 9,
**characterized in that** the drive mechanism (30) comprises at least one energy storage (36) for storing energy and for providing energy for the drive mechanism (30).

11. Depositing device according to one of the preceding claims,
**characterized in that** a knee airbag (44) is mounted on the depositing device (10).

12. Vehicle, in particular passenger vehicle (16), comprising a depositing device (10) according to one of the preceding claims.

## Patentansprüche

1. Ablagevorrichtung in einem Fahrzeug (16) zum Deponieren von Gegenständen, die aufweist
- ein Handschuhfach (22), in dem Gegenstände deponiert werden können,
- ein Oberflächenelement (24), das neben dem Handschuhfach (22) montiert ist,
- einen Handschuhfachdeckel (28), der beweglich an der Ablagevorrichtung (10) zwischen
einer ersten Position, in der das Handschuhfach (22) geschlossen und das Oberflächenelement (24) zumindest teilweise abgedeckt ist,
einer zweiten Position, in der das Handschuhfach (22) geschlossen und das Oberflächenelement (24) unbedeckt ist, und
einer dritten Position, in der das Handschuhfach (22) zugänglich ist und das Oberflächenelement (24) unbedeckt ist, und
- einen Aufnahmeabschnitt (40), in dem der Handschuhfachdeckel (28) zumindest teilweise aufgenommen wird, wenn er sich in der ersten Position befindet oder wenn er aus der ersten Position herausbewegt wird
**dadurch gekennzeichnet, dass** das Oberflächenelement (24) eine elektronische Einheit (26) aufweist.

2. Ablagevorrichtung gemäß Anspruch 1,
**dadurch gekennzeichnet, dass** der Handschuhfachdeckel (28) starr ist.

3. Ablagevorrichtung gemäß Anspruch 1,
**dadurch gekennzeichnet, dass** der Handschuhfachdeckel (28) flexibel ist.

4. Ablagevorrichtung gemäß Anspruch 1,
**dadurch gekennzeichnet, dass** der Handschuhfachdeckel (28) eine Anzahl von Lamellen (52), die beweglich miteinander verbunden sind, aufweist.

5. Ablagevorrichtung gemäß einem der Ansprüche 3 oder 4,
**dadurch gekennzeichnet, dass** der Handschuhfachdeckel (28) auf einer drehbaren Welle (50) rollbar montiert ist.

6. Ablagevorrichtung gemäß einem der vorhergehenden Ansprüche,
**dadurch gekennzeichnet, dass** das Handschuhfach (22) an der Ablagevorrichtung (10) zwischen einer eingefahrenen Position, in der er durch den Handschuhfachdeckel (28) abgedeckt werden kann, und einer ausgefahrenen Position, in der das Handschuhfach (22) aus der Ablagevorrichtung (10) herausragt, beweglich angebracht ist.

7. Ablagevorrichtung gemäß einem der vorhergehenden Ansprüche,
**dadurch gekennzeichnet, dass** die Ablagevorrichtung eine Verriegelungsvorrichtung (38) zum Versperren des Handschuhfachdeckels (28) in der ersten oder zweiten oder dritten Position aufweist.

8. Ablagevorrichtung gemäß einem der vorhergehenden Ansprüche,
**dadurch gekennzeichnet, dass** die Ablagevorrichtung (10) einen Antriebsmechanismus (30) zum Bewegen des Handschuhfachdeckels (28) zumindest zwischen der ersten und der dritten Position und eine Aktivierungseinheit (32) zum Aktivieren des Antriebsmechanismus (30) aufweist.

9. Ablagevorrichtung gemäß Anspruch 8,
**dadurch gekennzeichnet, dass** der Antriebsmechanismus (30) einen Motor (34) zum Bewegen des Handschuhfachdeckels (28) und/oder des Handschuhfachs (22) aufweist.

10. Ablagevorrichtung gemäß einem der Ansprüche 8 oder 9,
**dadurch gekennzeichnet, dass** der Antriebsmechanismus (30) mindestens einen Energiespeicher (36) zum Speichern von Energie und zum Bereitstellen von Energie für den Antriebsmechanismus (30) aufweist.

11. Ablagevorrichtung gemäß einem der vorhergehenden Ansprüche,
**dadurch gekennzeichnet, dass** an der Abscheidevorrichtung (10) ein Knieairbag (44) montiert ist.

12. Fahrzeug, insbesondere Passagierfahrzeug (16), das eine Ablagevorrichtung (10) gemäß einem der vorhergehenden Ansprüche aufweist.

## Revendications

1. Dispositif de rangement dans un véhicule (16) pour recevoir des objets comprenant
- une boîte à gants (22) dans laquelle peuvent ranger des objets
- un élément de surface (24) adjacent à la boîte à gants (22)
- un couvercle de boîte à gants (28) monté de manière mobile sur le dispositif de rangement (10) entre
* une première position dans laquelle la boîte à gants (22) est fermée et l'élément de surface (24) est au moins partiellement couvert
* une seconde position dans laquelle la boîte à gants (22) est fermée et l'élément de surface (24) est découvert
* une troisième position dans laquelle la boîte à gants est accessible et l'élément de surface (24) est découvert et
- une section de rangement (40) qui reçoit au moins partiellement le couvercle de boîte à gants (28) lorsqu'il est dans la première position ou lorsqu'il est dégagé de la première position,
dispositif **caractérisé en ce que**
l'élément de surface (24) comporte une unité électronique (26).

2. Dispositif de rangement selon la revendication 1,
**caractérisé en ce que**
le couvercle de boîte à gants (28) est rigide.

3. Dispositif de rangement selon la revendication 1,
**caractérisé en ce que**
le couvercle de boîte à gants (28) est flexible.

4. Dispositif de rangement selon la revendication 1,
**caractérisé en ce que**
le couvercle de boîte à gants (28) est formé d'un certain nombre de lames (22) reliées l'une à l'autre de manière mobile.

5. Dispositif de rangement selon l'une des revendications 3 ou 4,
**caractérisé en ce que**
le couvercle de boîte à gants (28) est monté de manière à rouler sur un arbre rotatif (50).

6. Dispositif de rangement selon l'une des revendications précédentes,
**caractérisé en ce que**
la boîte à gants (22) est montée de manière mobile sur le dispositif de rangement (10) entre une position rétractée dans laquelle elle est couverte par le couvercle de boîte à gants (28) et une position déployée dans laquelle la boîte à gants (22) vient en saillie du dispositif de rangement.

7. Dispositif de rangement selon l'une des revendications précédentes,
**caractérisé en ce que**
le dispositif de rangement comporte un dispositif de verrouillage (38) pour verrouiller le couvercle de boîte à gants (28) dans sa première ou sa seconde position.

8. Dispositif de rangement selon l'une des revendications précédentes,
**caractérisé en ce que** le dispositif de rangement (10) comporte un mécanisme d'entraînement (30) pour entrainer le couvercle de boîte à gants (28) au moins entre la première et la troisième position et une unité d'activation (32) pour activer le mécanisme d'entraînement.

9. Dispositif de rangement selon la revendication 8,
**caractérisé en ce que** le mécanisme d'entraînement (30) comporte un moteur (34) pour entrainer le couvercle de boîte à gants (28) et/ou la boîte à gants (22).

10. Dispositif de rangement selon l'une des revendications 8 ou 9,
**caractérisé en ce que**
le mécanisme d'entraînement (30) comporte au moins un accumulateur d'énergie (36) pour stocker de l'énergie et pour fournir l'énergie alimentant le mécanisme d'entraînement (30).

11. Dispositif de rangement selon l'une des revendications précédentes,
**caractérisé en ce qu'**
une poche à air de genou (44) est montée sur le dispositif de rangement (10).

12. Véhicule en particulier véhicule de tourisme (16) comportant un dispositif de rangement (10) selon l'une quelconque des revendications précédentes.
